# EUROPÄISCHE PATENTSCHRIFT

(11) **EP 1 742 085 B1**
(45) Veröffentlichungstag und Bekanntmachung des Hinweises auf die Patenterteilung: **22.04.2009**
(21) Anmeldenummer: 06113749.3
(22) Anmeldetag: 10.05.2006
(51) Int. Cl.: G01S 13/93, G01S 13/58

(54) **Verfahren zum Objekt-Tracking in Radarsystemen für Kraftfahrzeuge**
Method for object tracking in radar systems for motor vehicles
Procédé destiné à la recherche d'objets dans des systèmes radar pour véhicules

(30) Priorität: 27.06.2005 DE 102005029833
(43) Veröffentlichungstag der Anmeldung: 10.01.2007
(73) Patentinhaber: ROBERT BOSCH GMBH, 70442 Stuttgart (DE)
(72) Erfinder: Jordan, Ruediger, 70435 Stuttgart (DE); Schwindt, Oliver, 71277 Rutesheim (DE)

(56) Entgegenhaltungen:
- WO-A-20/06034894
- US-A- 5 923 282

## Beschreibung

### Stand der Technik

Die Erfindung betrifft ein Verfahren zum Objekt-Tracking in Radarsystemen für Kraftfahrzeuge, bei dem geortete Objekte verfolgt werden, indem sie anhand ihrer Abstände mit in vorangegangenen Meßzyklen georteten Objekten identifiziert werden. Weiterhin bezieht sich die Erfindung auf ein Fahrerassistenzsystem, in dem ein solches Verfahren implementiert ist.

In Fahrerassistenzsystemen für Kraftfahrzeuge werden Radarsysteme zur Erfassung des Verkehrsumfelds eingesetzt, insbesondere zur Ortung von vorausfahrenden Fahrzeugen und potentiellen Hindernissen im Vorfeld des eigenen Fahrzeugs. Typisches Anwendungsbeispiel ist ein ACC-System (Adaptive Cruise Control) zur automatischen Regelung des Abstands zu einem vorausfahrenden Fahrzeug.

Solche Fahrerassistenzsysteme weisen typischerweise einen langreichweitigen Radarsensor (LRR; Long Range Radar) auf, der beispielsweise dazu eingerichtet ist, Objekte in einem Abstandsbereich zwischen etwa 2 m und 100 m oder mehr zu orten. Bei kleineren Objektabständen als beispielsweise 2 m wird aufgrund von physikalischen Beschränkungen der beteiligten elektronischen Komponenten die Objektortung unzuverlässig und die Abstandsbestimmung ungenau.

Häufig handelt es sich bei dem Radarsensor um ein sogenanntes FMCW-Radar (Frequency Modulated Continuous Wave), bei dem die Frequenz des gesendeten Radarsignals rampenförmig moduliert wird, so daß der Frequenzunterschied zwischen dem gesendeten und dem empfangenen Signal von der Laufzeit und damit vom Objektabstand abhängig ist. Durch Mischen des gesendeten Signals mit dem empfangenen Signal wird ein Zwischenfrequenzsignal erzeugt, dessen Frequenz dem abstandsabhängigen Frequenzunterschied entspricht. Durch die nachgeschaltete Elektronik kann das Zwischenfrequenzsignal nur in einem begrenzten Frequenzbereich ausgewertet werden, uns insbesondere werden niedrige Frequenzkomponenten ausgefiltert bzw. unterdrückt. Da mit abnehmendem Abstand die Frequenz des Zwischenfrequenzsignals gegen null geht, gibt es für die detektierbaren Objektabstände eine untere Grenze.

Ein entsprechendes Problem kann auch bei einem Impulsradar auftreten, bei dem direkt die Laufzeit der Radarimpulse gemessen wird. In diesem Fall ist die untere Grenze für die detektierbaren Objektabstände beispielsweise vom zeitlichen Auflösungsvermögen des Radarsensors abhängig.

Mit Hilfe des Radarsensors werden die Abstände und Relativgeschwindigkeiten der georteten Objekte periodisch in aufeinanderfolgenden Meßzyklen neu bestimmt. Damit die Bewegungen der Objekte in ihrer zeitlichen Entwicklung verfolgt werden können, muß das im aktuellen Meßzyklus geortete Objekte mit einem in den vorangegangenen Zyklen georteten Objekt identifiziert werden, so daß sich die Meßdaten miteinander vergleichen lassen und geeignet Hypthensen über den Bewegungszustand und die Natur des Objekts aufgestellt werden können. Dies geschieht in einer sogenannten Tracking-Prozedur. Dabei wird anhand der in den vorangegangenen Meßzyklen erhaltenen Daten für jedes Objekt ein voraussichtlicher Wert für den Abstand und die Relativgeschwindigkeit im nächsten Meßzyklus prädiziert, und wenn die Meßdaten des neuen Meßzyklus eintreffen, sucht man nach einem Objekt, dessen Meßwerte innerhalb der Meß- und Vorhersagegenauigkeit mit den prädizierten Werten übereinstimmen, und dieses Objekt wird dann mit dem in der Vergangenheit verfolgten Objekt identifiziert. Anhand der neuen Daten wird dann die Prädiktion für den nächsten Meßzyklus aktualisiert. Auf diese Weise ist es beispielsweise möglich, bei der Annäherung an ein Objekt, beispielsweise an ein vorausfahrendes Fahrzeug, die Abnahme des Objektabstands im Laufe der Zeit zu verfolgen, allerdings nur so lange, wie das Objekt im detektierbaren Abstandsbereich verbleibt.

Für eine normale Abstandsregelung bei Fahrten mit relativ hoher Geschwindigkeit, beispielsweise mit 30 km/h oder mehr, ist der Abstands-Empfindlichkeitsbereich der herkömmlichen LRR-Sensoren ausreichend. Bei fortgeschrittenen Fahrerassistenzsystemen besteht jedoch gelegentlich der Wunsch, die Objekte auch noch bei sehr kleinen Objektabständen verfolgen zu können. Dies gilt beispielsweise für ein ACC-System, in dem eine sogenannte Stop & Go Funktion implementiert ist, die es gestattet, etwa beim Auffahren auf ein Stauende das eigene Fahrzeug in den Stand zu bremsen, sofern auch das vorausfahrende Fahrzeug anhält. Dabei kann gelegentlich der detektierbare Abstandsbereich unterschritten werden. Bisher erfordern solche Systeme deshalb den Einsatz eines zusätzlichen kurzreichweitigen Abstandssensors, beispielsweise eines SRR-Radarsensors (Short Range Radar).

Aus der WO 2006/034894 A1 ist ein Verfahren zur Objektverifikation in Radarsystemen für Kraftfahrzeuge bekannt, mit denen Abstände und Relativgeschwindigkeiten von georteten Objekten anhand von empfangenen Radarechos bestimmt werden, indem in den empfangenen Radarechos nach der Signatur von Mehrfachreflexionen gesucht wird. Dieses Dokument fällt unter Art. 54(3) EPÜ.

Aus der US 5,923,282 ist Pulsradarsystem bekannt, das den Abstand zu einem relativ nah am Radarsystem angeordneten Objekt bestimmt, indem die Empfangssignale hinsichtlich ganzzahliger Vielfacher eines Abstandswertes ausgewertet werden.

### Vorteile der Erfindung

Die Erfindung mit den in Anspruch 1 angegebenen Merkmalen ermöglicht es, den Abstandsbereich, innerhalb dessen die georteten Objekte verfolgt werden können, zu kleineren Abständen zu erweitern, ohne daß zusätzliche Hardwarekomponenten benötigt werden.

Dabei macht sich die Erfindung den Umstand zunutze, daß es insbesondere bei kleinen Objektabständen zu Mehrfachreflexionen des Radarsignals kommen kann. Das vom Radarsensor gesendete Signal wird an einem georteten Objekt, beispielsweise an der Rückfront eines vorausfahrenden Fahrzeugs, reflektiert, und ein Teil des reflektierten Signals wird wieder vom Radarsensor empfangen. Ein weiterer Teil dieses Signals wird jedoch an der Vorderfront des eigenen Fahrzeugs reflektiert und läuft wieder zum Objekt zurück, wo es erneut reflektiert wird. Wenn der Objektabstand nicht zu groß ist, erfaßt der Radarsensor auch dieses mehrfach reflektierte Signal noch mit einer über dem Rauschpegel liegenden Amplitude. Wenn dieses mehrfach reflektierte Signal als ein Objekt interpretiert wird, so handelt es sich um ein Scheinobjekt. Da das Signal die Distanz zum Objekt und zurück zweimal zurückgelegt hat und durch die Mehrfachreflexionen auch zweimal eine Dopplerverschiebung erfahren hat, erhält man für das Scheinobjekt im Verhältnis zu dem zugehörigen realen Objekt gerade den doppelten Abstand und die doppelte Relativgeschwindigkeit. Entsprechend würde man bei Mehrfachreflexionen höherer Ordnung Scheinobjekte erhalten, deren Abstände und Relativgeschwindigkeiten ganzzahlige Vielfache der Abstände und Relativgeschwindigkeiten des realen Objekts sind.

Wenn nun der Abstand eines verfolgten Objekts unter die Detektionsgrenze abnimmt, so beträgt der Abstand des durch Mehrfachreflexion zweiter Ordnung erzeugten Scheinobjekts gerade das Zweifache des tatsächlichen Objektabstands und liegt damit noch oberhalb der Detektionsgrenze (die Einfachreflexion wird hier als "Reflexion erster Ordnung" bezeichnent). Erfindungsgemäß wird nun anstelle des tatsächlichen Objekts das Scheinobjekt weiterverfolgt, und die durch die Mehrfachreflexionen bedingten Meßfehler werden korrigiert, indem die erhaltenen Meßwerte mit dem Faktor 1/2 bzw. bei Mehrfachreflexion höherer Ordnung mit dem Faktor 1/n multipliziert werden, wobei n die Ordnung der Mehrfachreflexion ist. Auf diese Weise ist es möglich, die Detektionsgrenze, bis zu der Objekte bei abnehmendem Abstand verfolgt werden können, um den Faktor 1/2 bzw. bei Ausnutzung von Mehrfachreflexionen höherer Ordnung um den Faktor 1/n zu verringern.

### Zeichnung

Ein Ausführungsbeispiel der Erfindung ist in den Zeichnungen dargestellt und in der nachfolgenden Beschreibung näher erläutert.

Es zeigen:
- Figur 1: eine Skizze zur Erläuterung der Funktionsweise eines Radarsystems an ein Kraftfahrzeug;
- Figur 2: ein Spektrum eines Zwischenfrequenzsignals für ein reales Objekt und ein durch Mehrfachreflexion entstandenes Scheinobjekt;
- Figur 3: ein Abstands/Zeit-Diagramm zur Illustration eines Tracking-Verfahrens gemäß der Erfindung;
- Figur 4: ein Abstands/Frequenz-Diagramm für das Verfahren nach Figur 3; und
- Figur 5: ein Flußdiagramm des Verfahrens zum Objekt-Tracking.

### Beschreibung des Ausführungsbeispiels

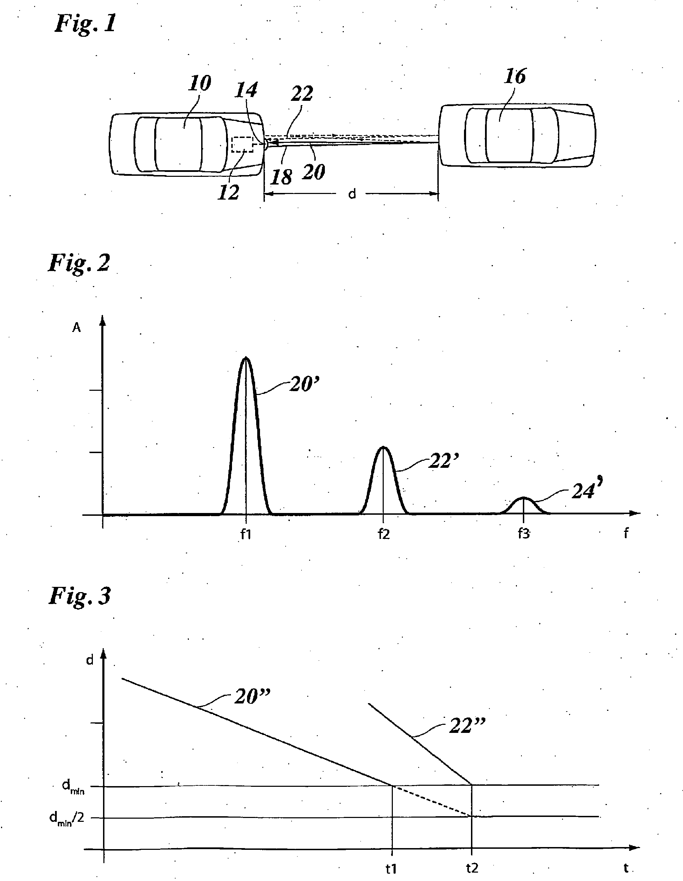

Figur 1 zeigt schematisch ein Fahrzeug 10, das mit einem Fahrerassistenzsystem 12, beispielsweise einem ACC-System, und einem zugehörigen Radarsystem ausgerüstet ist. Von dem Radarsystem ist lediglich ein Radarsensor 14 gezeigt, der vorn am Fahrzeug eingebaut ist, um Objekte im Vorfeld des Fahrzeugs 10 zu orten. Als Beispiel für ein solches Objekt ist ein weiteres Fahrzeug 16 gezeigt.

Der Radarsensor 14 sendet ein Signal 18, das beispielsweise eine Frequenz in der Größenordnung von 77 GHz hat und sich in Form einer Keule nach vom ausbreitet. Das Signal 18 wird, nachdem es eine dem Abstand d der Fahrzeuge entsprechende Distanz zurückgelegt hat, an der Rückfront des Fahrzeugs 16 reflektiert und erfährt dabei eine Dopplerverschiebung, die von der Relativgeschwindigkeit der beiden Fahrzeuge abhängig ist. Das reflektierte Signal 20 läuft zum Radarsensor 14 zurück und wird dort empfangen. Ein Teil des reflektierten Signals 20 trifft jedoch nicht wieder auf den Radarsensor 14, sondern wird an der Vorderfront des Fahrzeugs 10 erneut reflektiert, wie in Figur 1 durch gestrichelte Pfeile angedeutet wird. Dieses Signal wird nochmals am Fahrzeug 16 reflektiert und tritt dann, mit verringerter Amplitude, als mehrfach reflektiertes Signal 22 in den Radarsensor 14 ein. Das mehrfach reflektierte Signal 22 hat insgesamt den Weg 4d zurückgelegt, während das einfach reflektierte Signal 20 nur den Weg 2d zurückgelegt hat. Außerdem erfährt das mehrfach reflektierte Signal 22 bei der zweiten Reflexion am Fahrzeug 16 nochmals eine Dopplerverschiebung. Dieses Signal repräsentiert somit ein Scheinobjekt, sozusagen einen Schatten des Fahrzeugs 16, im doppelten Abstand und mit doppelter Relativgeschwindigkeit.

Als Beispiel soll angenommen werden, daß es bei dem Radarsensor 14 um ein FMCW-Radar handelt. Die Frequenz des gesendeten Radarsignals wird dann beispielsweise mit einer gleichmäßig steigenden Rampe moduliert, und das am Objekt 16 reflektierte und wieder vom Radarsensor 14 empfangene Signal wird mit dem zur gleichen Zeit gesendeten Signal gemischt, so daß man ein Zwischenfrequenzsignal erhält, dessen Frequenz gleich der Frequenzdifferenz zwischen dem gesendeten und dem empfangenen Signal ist.

In Figur 2 ist ein Spektrum eines solchen Zwischenfrequenzsignals dargestellt, d.h., die Amplitude A ist gegen die Frequenz f dieses Zwischenfrequenzsignals aufgetragen. Das einfach am Objekt 16 reflektierte Signal 20 zeichnet sich in diesem Spektrum als ein Peak 20' bei einer bestimmten Frequenz f1 ab. Wenn man annimmt, daß das Objekt 16 die Relativgeschwindigkeit v = 0 hat, so ist die Frequenz f1 proportional zur Signallaufzeit und damit zum Abstand d. Das mehrfach reflektierte Signal 22 zeichnet sich im Spektrum als ein Peak 22' bei einer Frequenz f2 = 2 * f1 ab. dieser Peak hat aufgrund der größeren Signalverluste eine geringere Amplitude. Gegebenenfalls kann durch Dreifach-Reflexion noch ein Peak 24 bei der Frequenz f3 = 3 * f1 entstehen. Wenn n die Ordnung der Reflexion ist, so gilt allgemein: fn = n * f1.

Wenn die Relativgeschwindigkeit v des Objekts von null verschieden ist, weisen die Peaks 20', 22' und 24 jeweils eine zusätzliche Frequenzverschiebung auf, die von d unabhängig und proportional zu v und zur Ordnung n der Reflexion ist. Um die abstands-und relativgeschwindigkeitsabhängigen Frequenzanteile zu separieren, ist es zweckmäßig, das gesendete Signal innerhalb jedes Meßzyklus mit einer steigenden und einer fallenden Rampe mit dem Betrage nach gleicher Steigung zu modulieren. Bildet man dann jeweils die Differenz der beiden so erhaltenen Frequenzen f1, f2, ..., fn, so sind in der Differenz die geschwindigkeitsabhängigen Anteile eliminiert. Umgekehrt werden die abstandsabhängigen Anteile eliminiert, wenn man jeweils die Summe der beiden Frequenzen fn bildet.

In Figur 3 ist für den Fall, daß sich das Fahrzeug 10 mit konstanter Geschwindigkeit dem Objekt 16 nähert, der in der oben beschriebenen Weise für aufeinanderfolgende Meßzyklen gemessene Abstand d des Objekts gegen die Zeit t aufgetragen. Die Kurve 20" repräsentiert dabei den Abstand, der sich durch Auswertung des einfach reflektierten Radarsignals 20 ergibt, und die Kurve 22" repräsentiert den Abstand des Scheinobjekts, den man durch Auswertung des zweifach reflektierten Signals 22 erhält. Beide Kurven fallen linear ab, und die für jeden Zeitpunkt durch die beiden Kurven angegebenen Werte unterscheiden sich um den Faktor 2, weil durch die Zweifachreflexion der doppelte Abstand vorgetäuscht wird.

Zum Zeitpunkt t1 erreicht die Kurve 20" die untere Grenze dₘᵢₙ des detektierbaren Abstandsbereiches. Von diesem Zeitpunkt an könnte das Objekt anhand des einfach reflektierten Signals 20 nicht mehr verfolgt werden. Die Kurve 22" erreicht diese Grenze jedoch erst zum Zeitpunkt t2, so daß sich das Objekt 16 durch Auswertung des zweifach reflektierten Signals 22 auch im Intervall zwischen t1 und t2 noch verfolgen läßt, wobei allerdings die erhaltenen Abstände und Relativgeschwindigkeiten jeweils durch 2 dividiert werden müssen, damit sie den realen Abstand und die reale Relativgeschwindigkeit des Objekts angeben. Im Ergebnis wird so die untere Grenze des Detektionsbereiches auf dₘᵢₙ/2 reduziert.

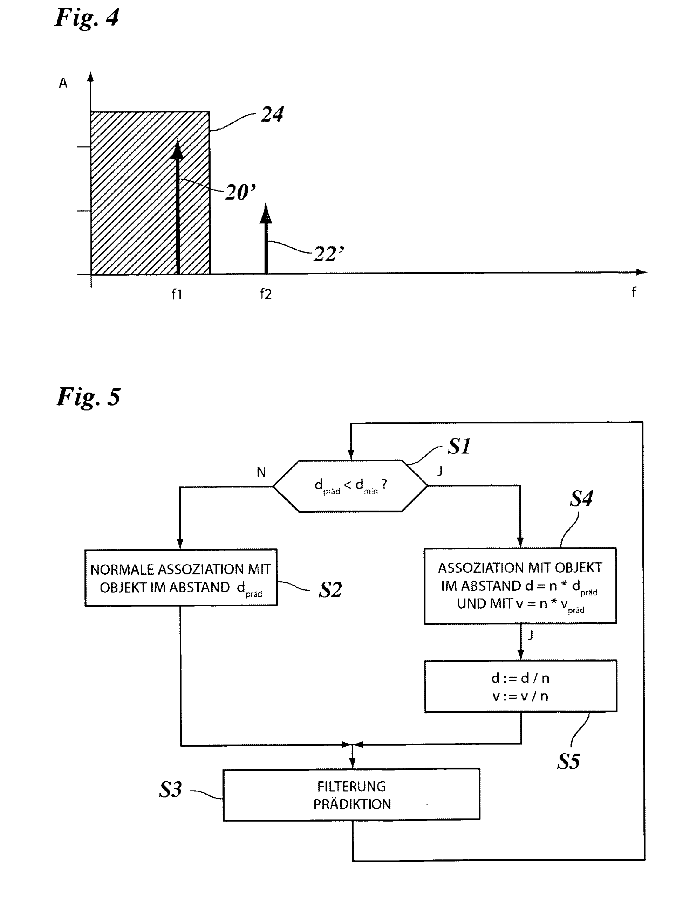

In Figur 4 ist dieser Sachverhalt noch einmal schematisch in der Form eines Amplituden/Frequenz-Diagramms dargestellt. Die Peaks 20' und 22' sind hier schematisch als Pfeile eingezeichnet. Der schraffiert eingezeichnete Bereich 24 am unteren Ende des Frequenzspektrums repräsentiert den Bereich, in dem die Objekte anhand des einfachreflektierten Signals "unsichtbar" wären, weil ihr Abstand kleiner ist als dₘᵢₙ und somit die Frequenz des Zwischenfrequenzsignals so klein ist, daß sie außerhalb des auswertbaren Teils des Spektrums liegt. Die Frequenz des durch zweifache Reflexion entstandenen Peaks 22' kann jedoch nach wie vor ausgewertet werden.

In Figur 5 ist die Tracking-Prozedur zur Verfolgung von Objekten wie beispielsweise des Objekts 16 als Flußdiagramm dargestellt. Die Prozedur wird zyklisch durchlaufen, und zwar synchron mit den Meßzyklen des Radarsensors 14. Es wird hier davon ausgegangen, daß das betreffende Objekt 16 bereits in den vorangegangenen Meßzyklen verfolgt wurde, so daß sich durch Extrapolation der Abstandskurve (Figur 3) ein Vorhersagewert d_{präd} für den im nächsten Meßzyklus zu erwartenden Abstand des Objekts bestimmen läßt. Entsprechend wird auch ein Vorhersagewert v_{präd} für die Relativgeschwindigkeit v bestimmt.

In Schritt S 1 wird dann geprüft, ob der Vorhersagewert d_{präd} für den Abstand unterhalb der Grenze dₘᵢₙ des Detektionsbereiches liegt. Wenn dies nicht der Fall ist, so läuft die Tracking-Prozedur in der bisher üblichen Weise ab, d.h., in Schritt S2 wird nach einem Objekt gesucht, dessen Abstand d im neuen Meßzyklus etwa mit d_{präd} übereinstimmt, und dieses Objekt wird mit dem bisher verfolgten Objekt identifiziert. In Schritt S3 werden dann die Meßwerte in der üblichen Weise gefiltert, und es werden die Vorhersagewerte d_{präd} und v_{präd} für den nächsten Meßzyklus bestimmt, wonach ein Rücksprung zu Schritt S1 erfolgt.

Falls sich in Schritt S 1 ergibt, daß d_{präd} kleiner ist als dₘᵢₙ, so wird nach Schritt S4 verzweigt, und es wird nicht nach dem Objekt selbst gesucht, sondern nach dem zugehörigen Scheinobjekt, das durch Mehrfachreflexion n-ter Ordnung entstanden ist (in der Praxis wird man sich zumeist auf n = 2 beschränkten). In Schritt S4 wird also nach einem Objekt gesucht, dessen scheinbarer Abstand etwa gleich n * d_{präd} ist und dessen scheinbare Relativgeschwindigkeit etwa gleich n * v_{präd} ist, und dieses Scheinobjekt wird mit dem bisher verfolgten Objekt identifiziert.

In Schritt S5 werden dann die Meßwerte entsprechend der Ordnung n der Mehrfachreflexion korrigiert, indem der für das Scheinobjekt gemessene Abstand d sowie die für das Scheinobjekt gemessene Relativgeschwindigkeit v jeweils durch n dividiert werden. Mit den so korrigierten Werten erfolgt dann in Schritt 3 die übliche Filterung und die Prädiktion der nächsten Vorhersagewerte.

Wenn die untere Grenze dₘᵢₙ des Detektionsbereiches beispielsweise 2m beträgt, können somit die Objekte für n = 2 noch bis hinunter zu einem Abstand von 1 m verfolgt werden. Wenn sich der Objektabstand dann wieder auf mehr als 2 m vergrößert, so wird dies in Schritt S1 erkannt, und das Objekt wird dann wieder mit der "normalen" Tracking-Prozedur (Schritt S2) verfolgt.

Die Amplituden der vom Radarsensor 14 empfangenen einfach und mehrfach reflektierten Radarsignale 20 und 22 werden naturgemäß mit abnehmendem Abstand größer. Wie in Figur 3 dargestellt ist, liegt das zweifach reflektierte Signal 22" schon eine gewisse Zeit vor dem Zeitpunkt t1 oberhalb des Rauschpegels, so daß die Mehrfachreflexion bereits vor dem Zeitpunkt t1 erkennbar ist. Gemäß einer Variante des oben beschriebenen Verfahrens können in dieser Situation bereits vor dem Zeitpunkt t1 das reale Objekt sowie das entsprechende Scheinobjekt parallel verfolgt werden, indem die Schritte S4 und S5 parallel zu dem Schritt S2 ausgeführt werden. Auf diese Weise lassen sich die Objekte, für die ein mehrfach reflektiertes Signal vorhanden ist, mit erhöhter Sicherheit verifizieren, und ggf. kann auch die Genauigkeit der Abstands- und Relativgeschwindigkeitsmessung verbessert werden. Wenn dann aus irgendeinem Grund kein mehrfach reflektiertes Signal detektierbar ist, beispielsweise weil der Hauptteil des Radarsignals an einer geneigten Rückfrontpartie des Objekts 16 zur Seite abgelenkt wird, so kann dies bereits erkannt werden, bevor der prädizierte Abstand d_{präd} unter dₘᵢₙ abgenommen hat, und es kann umgehend ein Warnsignal ausgegeben werden, das auf einen Zielobjektverlust hinweist, ohne daß erst die unter diesen Umständen aussichtslose Suche nach dem Scheinobjekt in Schritt S4 abgewartet werden muß.

## Patentansprüche

1. Verfahren zum Objekt-Tracking in Radarsystemen für Kraftfahrzeuge, bei dem geortete Objekte (16) verfolgt werden, indem sie anhand ihrer Abstände (d) mit in vorangegangenen Meßzyklen georteten Objekten identifiziert werden, das die folgenden Schritte aufweist:
a) Assoziieren eines durch Mehrfachreflexion entstandenen Radarsignals (22) mit einem verfolgten Objekt im Nahbereich und
b) Fortsetzen der Verfolgung anhand des mehrfach reflektierten Signals (22), mit Korrektur des Abstands (d) entsprechend der Ordnung (n) der Mehrfachreflexion,
**dadurch gekennzeichnet, daß** in jedem Meßzyklus des Radarsensors für jedes geortete Objekt (16) in einem ersten Schritt (S1) geprüft wird, ob der für dieses Objekt für den nächsten Meßzyklus prädizierte Abstand (d_{präd}) kleiner ist als eine untere Grenze (dₘᵢₙ) des Abstandsbereiches, in dem die Objekte anhand des einfach reflektierten Radarsignals (20) detektierbar sind, und daß die Schritte a) und b) nur dann ausgeführt werden, wenn diese Bedingung erfüllt ist, während andernfalls das Objekt (16) anhand des einfach reflektierten Radarsignals (20) verfolgt wird.

2. Verfahren nach Anspruch 1, **dadurch gekennzeichnet, daß** in Schritt (b) auch die Relativgeschwindigkeit (v) des Objekts (16) entsprechend der Ordnung (n) der Mehrfachreflexion korrigiert wird.

3. Fahrerassistenzsystem für Kraftfahrzeuge, **dadurch gekennzeichnet, daß** darin ein Verfahren nach einem der Ansprüche 1 oder 2 implementiert ist

4. Fahrerassistenzsystem nach Anspruch 3, **dadurch gekennzeichnet, daß** es als Radarsystem ein FMCW-Radar aufweist.

## Claims

1. Method for object tracking in radar systems for motor vehicles, in which objects (16) whose location has been determined are tracked by identifying them by reference to their distances (d) from objects whose location has been determined in preceding measuring cycles, which method has the following steps:
a) a radar signal (22) which has been produced by multiple reflection is associated with a tracked close-range object, and
b) the tracking is continued by reference to the multiply reflected signal (22), with correction of the distance (d) in accordance with the order (n) of the multiple reflection,
**characterized in that,** in a first step (S1), each object (16) whose location has been determined is tested in each measuring cycle of the radar sensor in order to find out whether the distance (d_{pred}) which has been predicted for the next measuring cycle for this object is smaller than a lower limit (dₘᵢₙ) of the distance range in which the objects can be detected by reference to the radar signal (20) which is reflected a single time, and **in that** the steps a) and b) are carried out only if this condition is met, while otherwise the object (16) is tracked by reference to the radar signal (20) which is reflected a single time.

2. Method according to Claim 1, **characterized in that** in step (b) the relative velocity (v) of the object (16) is also corrected in accordance with the order (n) of the multiple reflection.

3. Driver assistance system for motor vehicles, **characterized in that** a method according to one of Claims 1 or 2 is implemented therein.

4. Driver assistance system according to Claim 3, **characterized in that** it has an FMCW radar as the radar system.

## Revendications

1. Procédé de suivi d'un objet dans des systèmes radar pour véhicules automobiles, avec lequel des objets repérés (16) sont suivis en les identifiant au moyen de leurs écarts (d) par rapport aux objets repérés au cours des cycles de mesure précédents, lequel présente les étapes suivantes :
a) Association d'un signal radar (22) produit par une réflexion multiple à un objet suivi dans la zone de proximité et
b) Poursuite du suivi au moyen du signal (22) réfléchi plusieurs fois avec correction de l'écart (d) en fonction de la séquence (n) de la réflexion multiple,
**caractérisé en ce que** dans chaque cycle de mesure du capteur radar, pour chaque objet repéré (16), un contrôle est effectué dans une première étape (S1) pour vérifier si l'écart prévu (d_{präd}) pour cet objet dans le cycle de mesure suivant est inférieur à une limite inférieure (dₘᵢₙ) de la plage d'écart dans laquelle peuvent être détectés des objets au moyen du signal radar (20) réfléchi une seule fois et que les étapes a) et b) ne sont exécutées que si cette condition est remplie, alors que dans le cas contraire l'objet (16) est suivi au moyen du signal radar (20) réfléchi une seule fois.

2. Procédé selon la revendication 1, **caractérisé en ce que** la vitesse relative (v) de l'objet (16) est également corrigée dans l'étape (b) en fonction de la séquence (n) de la réflexion multiple.

3. Système d'assistance au conducteur pour véhicules automobiles, **caractérisé en ce qu'**il y est mis en oeuvre un procédé selon l'une des revendications 1 ou 2.

4. Système d'assistance au conducteur selon la revendication 3, **caractérisé en ce qu'**il présente un radar FMCW comme système radar.
